(19) Europäisches Patentamt
European Patent Office
Office européen des brevets

(11) EP 3 164 270 B1

(12) **FASCICULE DE BREVET EUROPEEN**

(45) Date de publication et mention de la délivrance du brevet:
**17.10.2018 Bulletin 2018/42**

(21) Numéro de dépôt: **15734134.8**

(22) Date de dépôt: **02.07.2015**

(51) Int Cl.:
***B60C 1/00*** (2006.01) ***C08C 19/44*** (2006.01)
***C08F 297/04*** (2006.01) ***C08L 19/00*** (2006.01)

(86) Numéro de dépôt international:
**PCT/EP2015/065123**

(87) Numéro de publication internationale:
**WO 2016/001372 (07.01.2016 Gazette 2016/01)**

(54) **ELASTOMÈRE DIÉNIQUE À IP RÉDUIT POSSÉDANT UNE FONCTION SILANOL EN EXTRÉMITÉ DE CHAÎNE ET COMPOSITION LE CONTENANT**

DIENELASTOMER MIT REDUZIERTEM PI MIT EINER SILANOLFUNKTION AM KETTENENDE ZUSAMMENSETZUNG DAMIT

DIENE ELASTOMER WITH A REDUCED PI HAVING A SILANOL FUNCTION AT THE CHAIN END AND COMPOSITION CONTAINING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.07.2014 FR 1456373**

(43) Date de publication de la demande:
**10.05.2017 Bulletin 2017/19**

(73) Titulaire: **Compagnie Générale des Etablissements Michelin**
**63000 Clermont-Ferrand (FR)**

(72) Inventeurs:
- **DIRE, Charlotte**
  **F-63040 Clermont-Ferrand Cedex 09 (FR)**
- **VAULTIER, Florent**
  **F-63040 Clermont-Ferrand Cedex 09 (FR)**
- **DORATO, Margarita**
  **F-63040 Clermont-Ferrand Cedex 09 (FR)**
- **MARECHAL, Jean-Marc**
  **F-63040 Clermont-Ferrand Cedex 09 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 122 281** **FR-A1- 2 951 178**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention se rapporte à un élastomère diénique modifié comprenant au moins 70% en poids d'un élastomère diénique spécifique fonctionnalisé en extrémité de chaîne par une fonction silanol ou un bloc polysiloxane ayant une extrémité silanol et au plus 30% en poids d'un élastomère diénique étoilé spécifique, la viscosité Mooney dudit élastomère diénique modifié variant de 30 à 80.

Depuis que les économies de carburant et la nécessité de préserver l'environnement sont devenues une priorité, il est souhaitable de produire des mélanges possédant une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

La réduction de l'hystérèse des mélanges est un objectif permanent qui doit toutefois se faire en conservant intacte l'aptitude à la mise en oeuvre, en particulier à cru, des mélanges, tout en maintenant la résistance au fluage des élastomères.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

Dans le cadre des mélanges contenant une charge inorganique renforçante, il a été proposé d'utiliser des copolymères diéniques fonctionnalisés par des groupements silanol.

On peut citer les brevets FR2951178B1 et EP778311B1 qui décrivent l'utilisation de polymères diéniques fonctionnalisés par un groupement silanol en extrémité de chaîne. Dans le brevet FR2951178B1, les polymères fonctionnels sont décrits comme associés à des polymères étoilés à l'aide de composés à base d'étain. Plus récemment, la demande de brevet WO2009077837A1 décrit des élastomères fonctionnalisés par un groupement silanol à une extrémité de chaîne et par un groupement aminé à l'autre extrémité de chaîne. Ces élastomères sont également décrits comme pouvant être associés à des élastomères étoilés, en particulier par du silicium ou de l'étain. Les associations illustrées conduisent toutefois à une composition de caoutchouc renforcée dont le compromis mise en oeuvre de la composition / hystérèse de la composition / fluage de l'élastomère n'est pas satisfaisant pour une application pneumatique.

Il s'avère ainsi que les compositions décrites dans l'art antérieur ne présentent pas toujours une hystérèse satisfaisante et une mise en oeuvre acceptable pour une utilisation en bande de roulement.

Il existe donc un besoin de fournir un élastomère fonctionnalisé silanol en extrémité de chaîne permettant l'obtention de compositions de caoutchouc possédant un compromis mise en oeuvre à cru / hystérèse amélioré tout en maintenant la résistance au fluage de l'élastomère.

Le but de la présente invention est donc de proposer une telle composition. Un objectif est en particulier de proposer un élastomère fonctionnalisé interagissant de manière satisfaisante avec la charge renforçante d'une composition de caoutchouc le contenant afin d'en diminuer l'hystérèse, tout en conservant une mise en oeuvre à cru acceptable et une résistance au fluage de l'élastomère satisfaisante, en vue notamment d'une utilisation en bande de roulement pour pneumatique.

Ce but est atteint en ce que les inventeurs viennent de découvrir de manière surprenante au cours de leurs recherches qu'un élastomère diénique modifié comprenant au moins 70% en poids, par rapport au poids total de l'élastomère diénique modifié, d'un élastomère diénique fonctionnalisé en extrémité de chaîne par une fonction silanol ou un bloc polysiloxane ayant une extrémité silanol, présentant une distribution de masse moléculaire étroite avant fonctionnalisation, et au plus 30% en poids, par rapport au poids total de l'élastomère diénique modifié, d'un élastomère diénique étoilé, présentant une distribution de masse moléculaire étroite avant étoilage, la viscosité Mooney dudit élastomère diénique modifié variant de 30 à 80, confère aux compositions de caoutchouc le contenant une amélioration du compromis mise en oeuvre à cru / hystérèse tout en conservant intacte la résistance au fluage de l'élastomère.

L'invention a donc pour objet un élastomère diénique modifié comprenant :

a) au moins 70% en poids, par rapport au poids total de l'élastomère diénique modifié, d'un élastomère diénique fonctionnalisé en une seule extrémité de chaîne par une fonction silanol ou un bloc polysiloxane ayant une extrémité de chaîne silanol, et présentant un indice de polymolécularité avant fonctionnalisation inférieur ou égal à 1,6,
b) plus de 0 et jusqu'à 30% en poids, par rapport au poids total de l'élastomère diénique modifié, d'un élastomère diénique étoilé et présentant un indice de polymolécularité avant étoilage inférieur ou égal à 1,6,

la viscosité Mooney dudit élastomère diénique modifié variant de 30 à 80.

L'invention a encore pour objet une composition de caoutchouc renforcée à base d'au moins une charge renforçante et d'une matrice élastomère comprenant au moins ledit élastomère diénique modifié.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, on entend par élastomère diénique modifié un élastomère diénique qui comporte un groupement comprenant un ou plusieurs hétéroatomes.

Ce groupement peut se situer en bout de chaîne. On dira alors que l'élastomère diénique est fonctionnalisé en bout ou en extrémité de chaîne. C'est généralement un élastomère obtenu par réaction d'un élastomère vivant sur un agent de fonctionnalisation, c'est à dire toute molécule au moins mono fonctionnelle, la fonction étant tout type de groupement chimique connu par l'homme de l'art pour réagir avec un bout de chaîne vivant.

Ce groupement peut se situer dans la chaîne élastomère principale linéaire. On dira alors que l'élastomère diénique est couplé ou encore fonctionnalisé en milieu de chaîne, par opposition à la position "en bout de chaîne" et bien que le groupement ne se situe pas précisément au milieu de la chaîne élastomère. C'est généralement un élastomère obtenu par réaction d'un élastomère vivant sur un agent de couplage, c'est à dire toute molécule au moins difonctionnelle, la fonction étant tout type de groupement chimique connu par l'homme de l'art pour réagir avec un bout de chaîne vivant.

Ce groupement peut être central auquel n chaînes élastomères (n>2) sont liées formant une structure en étoile. On dira alors que l'élastomère diénique est étoilé. C'est généralement un élastomère obtenu par réaction d'un élastomère vivant sur un agent d'étoilage, c'est à dire toute molécule multifonctionnelle, la fonction étant tout type de groupement chimique connu par l'homme de l'art pour réagir avec un bout de chaîne vivant.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique peut avoir toute microstructure qui est fonction des conditions de polymérisation utilisées. L'élastomère peut être à blocs, statistique, séquencé, microséquencé, etc ... et être préparé en dispersion ou en solution. Lorsqu'il s'agit d'une polymérisation anionique, la microstructure de ces élastomères peut être déterminée par la présence ou non d'un agent randomisant et les quantités d'agent randomisant employées.

Par indice de polymolécularité, on entend au sens de l'invention le rapport masse moléculaire moyenne en poids/masse moléculaire moyenne en nombre. Les masses moléculaires moyennes en poids et en nombre sont mesurées par chromatographie d'exclusion stérique.

Selon un mode de réalisation préféré, l'élastomère diénique modifié selon l'invention comprend au moins 80% en poids, par rapport au poids total de l'élastomère diénique modifié, de l'élastomère diénique fonctionnalisé a).

Selon un autre mode de réalisation préféré, l'élastomère diénique modifié selon l'invention comprend au plus 20% en poids, par rapport au poids total de l'élastomère diénique modifié, de l'élastomère diénique étoilé b).

Selon un mode de réalisation particulièrement préféré, l'élastomère diénique modifié selon l'invention comprend au moins 80% en poids, par rapport au poids total de l'élastomère diénique modifié, de l'élastomère diénique fonctionnalisé a) et au plus 20% en poids, par rapport au poids total de l'élastomère diénique modifié, de l'élastomère diénique

étoilé b).

Le bloc polysiloxane ayant une extrémité silanol de l'élastomère diénique a) fonctionnalisé en extrémité de chaîne peut être de formule générale suivante :

$$[-(SiR_1R_2O)_x-H]$$

dans laquelle :

- $R_1$ et $R_2$, identiques ou différents, représentent un groupe alkyle, cycloalkyle, aryle, alkaryle, aralkyle, vinyle ayant de 1 à 10 atomes de carbone.
- x est un nombre entier allant de 1 à 1500 et préférentiellement de 1 à 50, plus préférentiellement x vaut 1.

De préférence, $R_1$ et $R_2$ représentent un groupe alkyle ayant de 1 à 6 atomes de carbone.

De préférence encore, $R_1$ et $R_2$ représentent chacun un radical méthyle.

Selon l'invention, l'élastomère diénique fonctionnalisé portant en extrémité de chaîne une fonction silanol ou un bloc polysiloxane ayant une extrémité silanol est monofonctionnel. En d'autres termes, l'élastomère diénique est fonctionnalisé en une seule extrémité de chaîne. L'autre extrémité de chaîne est libre et ne porte aucune fonction.

L'élastomère diénique étoilé b) est de préférence un élastomère diénique étoilé à base d'étain ou de silicium.

L'élastomère diénique étoilé b) est de préférence un élastomère diénique étoilé à quatre branches.

L'élastomère diénique fonctionnalisé a) portant en extrémité de chaîne une fonction silanol ou un bloc polysiloxane ayant une extrémité silanol et l'élastomère diénique étoilé b) peuvent avoir avant fonctionnalisation et étoilage la même microstructure ou une microstructure différente.

De préférence, l'élastomère diénique fonctionnalisé a) et l'élastomère diénique étoilé b) ont avant fonctionnalisation et étoilage la même microstructure.

De préférence encore, l'élastomère diénique fonctionnalisé a) et l'élastomère diénique étoilé b) ont avant fonctionnalisation et étoilage la même microstructure et la même macrostructure.

L'élastomère diénique modifié selon l'invention peut être obtenu par un procédé tel que décrit ci-après.

La première étape d'un procédé de préparation de l'élastomère diénique modifié est la polymérisation anionique d'au moins un monomère diène conjugué en présence d'un initiateur de polymérisation.

En tant qu'initiateur de polymérisation, on peut utiliser tout initiateur anionique monofonctionnel connu. Toutefois un initiateur contenant un métal alcalin tel que le lithium est utilisé à titre préférentiel.

Comme initiateurs organolithiens conviennent notamment ceux comportant une liaison carbone-lithium. De préférence, on utilisera un initiateur organolithien hydrocarboné ne comportant pas d'hétéroatome. Des composés représentatifs sont les organolithiens aliphatiques tels que l'éthyllithium, le n-butyllithium (n-BuLi), l'isobutyllithium, etc ...

La polymérisation est de préférence effectuée en présence d'un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

La polymérisation peut être effectuée en continu ou en discontinu. On effectue généralement la polymérisation à une température comprise entre 20 °C et 120 °C et de préférence voisine de 30 °C à 110 °C. On peut bien entendu également ajouter en fin de polymérisation un agent de transmétallation pour modifier la réactivité de l'extrémité de chaîne vivante.

L'élastomère diénique vivant issu de la polymérisation est ensuite fonctionnalisé pour préparer l'élastomère diénique modifié selon l'invention.

Selon une première variante de préparation de l'élastomère diénique modifié selon l'invention, on mélange l'élastomère diénique fonctionnalisé en extrémité de chaîne par une fonction silanol ou un bloc polysiloxane ayant une extrémité de chaîne silanol et l'élastomère diénique étoilé, dans les proportions appropriées.

L'élastomère diénique fonctionnalisé en extrémité de chaîne par une fonction silanol ou un bloc polysiloxane ayant une extrémité silanol peut être obtenu avantageusement selon les modes opératoires décrits dans la demande de brevet EP-A-0 778 311, dont la description est intégrée par référence.

L'élastomère diénique étoilé peut être obtenu de manière connue en soi par réaction du bout de chaîne vivant avec un agent d'étoilage, c'est à dire toute molécule multifonctionnelle, la fonction étant tout type de groupement chimique connu par l'homme de l'art pour réagir avec un bout de chaîne vivant. A titre préférentiel, les agents d'étoilage sont des agents à base d'étain ou de silicium de fonctionnalité supérieure à 2, et pouvant être représentés par les formules $SnRX_3$, $SnHX_3$, $SnX_4$, $SiRX_3$, $SiHX_3$, $SiX_4$, $SiR(OR)_3$, $Si(OR)_4$ avec R étant un groupement alkyl, aralkyl ou vinyl possédant de 1 à 20 atomes de carbone et X un halogène.

Le mélangeage des deux élastomères peut s'effectuer dans un solvant inerte par exemple un hydrocarbure aliphatique ou alicyclique comme le pentane, l'hexane, l'heptane, l'iso-octane, le cyclohexane ou un hydrocarbure aromatique comme le benzène, le toluène, le xylène, qui peut être le même que le solvant de polymérisation. On

effectuera alors le mélangeage à une température comprise entre 20°C et 120°C et de préférence voisine de 30°C à 110°C.

Selon une deuxième variante de préparation de l'élastomère diénique modifié selon l'invention, l'élastomère diénique vivant issu de l'étape de polymérisation est soumis à la réaction d'un agent d'étoilage et à celle d'un agent de fonctionnalisation susceptible d'introduire en extrémité de chaîne polymérique la fonction silanol ou le bloc polysiloxane ayant une extrémité silanol.

A titre d'agent de fonctionnalisation susceptible d'introduire en extrémité de chaîne polymérique la fonction silanol ou le bloc polysiloxane ayant une extrémité silanol, on peut citer les agents de type polysiloxane cyclique pour obtenir un élastomère possédant une extrémité SiO- et ce dans un milieu qui ne permet pas la polymérisation dudit cyclopolysiloxane.

A titre de polysiloxanes cycliques, on peut citer ceux répondant à la formule :

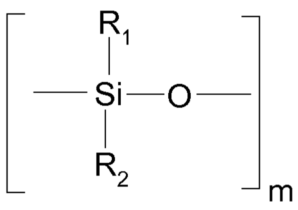

dans laquelle :

- $R_1$ et $R_2$, identiques ou différents, représentent un groupe alkyle, cycloalkyle, aryle, alkaryle, aralkyle, vinyle ayant de 1 à 10 atomes de carbone,
- m représente un nombre entier de valeur 3 à 8.

A titre de composés polysiloxanes cycliques préférentiels, on peut citer l'hexaméthylcyclotrisiloxane, le triméthyltriéthylcyclotrisiloxane, l'octaméthylcyclotétrasiloxane, le décaméthylcyclopentasiloxane ainsi que leurs mélanges.

A titre d'agents d'étoilage préférentiels, on peut citer le tétrachlorure d'étain ou le tétrachlorosilane.

Ainsi, par exemple, la fonctionnalisation de l'élastomère diénique vivant issu de l'étape de polymérisation peut s'effectuer à une température variant de 20 à 120°C, en présence dans un premier temps d'une quantité appropriée d'un agent d'étoilage pour étoiler au plus 30% en poids de l'élastomère diénique vivant. Puis, dans un deuxième temps, on fonctionnalise les chaînes vivantes restantes de l'élastomère diénique obtenu après la première étape par adjonction d'un agent de fonctionnalisation susceptible d'introduire en extrémité de chaîne polymérique la fonction silanol ou le bloc polysiloxane ayant une extrémité silanol et réaction avec cet agent. La réaction de fonctionnalisation de l'élastomère diénique est ensuite stoppée par la désactivation des chaînes vivantes restantes et par réaction des extrémités de chaînes SiO- avec un composé donneur de protons pour conduire à l'élastomère diénique modifié selon l'invention.

L'élastomère diénique modifié conforme à l'invention présente une résistance au fluage satisfaisante, ce qui induit une bonne tenue lors du stockage et du transport de ce caoutchouc.

L'élastomère diénique modifié selon l'invention peut être avantageusement utilisé, pour une application en pneumatique, dans une composition de caoutchouc renforcée par au moins une charge inorganique telle que la silice, dont il améliore le compromis mise en oeuvre à cru / hystérèse. Cette composition de caoutchouc fait également l'objet de l'invention.

Comme expliqué précédemment, un autre objet de l'invention est une composition de caoutchouc renforcée à base d'au moins une charge renforçante et d'une matrice élastomère comprenant au moins un élastomère diénique modifié tel que décrit plus haut. Il doit être entendu que la composition de caoutchouc peut comprendre un ou plusieurs de ces élastomères diéniques modifiés selon l'invention.

La composition de caoutchouc renforcée selon l'invention peut se présenter à l'état réticulé ou à l'état non réticulé, autrement dit réticulable.

L'élastomère diénique modifié selon l'invention peut être, selon différentes variantes, utilisé seul dans la composition ou en coupage avec au moins un autre élastomère diénique conventionnel, qu'il soit étoilé, couplé, fonctionnalisé ou non. Préférentiellement, cet autre élastomère diénique utilisé dans l'invention est choisi dans le groupe des élastomères diéniques fortement insaturés constitué par les polybutadiènes (BR) les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR). On peut également envisager un coupage avec tout élastomère synthétique autre que diénique, voire avec tout polymère autre qu'élastomère, par exemple un polymère thermoplastique.

Lorsque l'élastomère conventionnel utilisé en coupage est du caoutchouc naturel et/ou un ou plusieurs polymères diéniques comme par exemple les polybutadiènes, les polyisoprènes, les copolymères butadiène-styrène ou butadiène-styrène-isoprène, cet élastomère ou ces élastomères, modifiés ou non, peuvent alors être présents de 1 à 70 parties en poids pour 100 parties d'élastomère diénique modifié selon l'invention.

On notera que l'amélioration des propriétés de la composition selon l'invention sera d'autant plus élevée que la proportion du ou des élastomères différents des élastomères diéniques modifiés de l'invention dans cette composition sera réduite.

Ainsi, de préférence, la matrice élastomère comprend majoritairement en masse l'élastomère diénique modifié selon l'invention.

Plus préférentiellement, la matrice élastomère est uniquement constituée de l'élastomère diénique modifié selon l'invention.

La composition de caoutchouc de l'invention comprend, outre au moins une matrice élastomère telle que décrit ci-dessus, au moins une charge renforçante.

On peut utiliser tout type de charge renforçante connue pour ses capacités à renforcer une composition de caoutchouc utilisable pour la fabrication de bandes de roulement de pneumatiques, par exemple du noir de carbone, une charge inorganique renforçante telle que de la silice à laquelle est associé de manière connue un agent de couplage, ou encore un mélange de ces deux types de charge.

Comme noirs de carbone conviennent tous les noirs de carbone, utilisés individuellement ou sous forme de mélanges, notamment les noirs du type HAF, ISAF, SAF conventionnellement utilisés dans les bandes de roulement des pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375. Les noirs de carbone pourraient être par exemple déjà incorporés à l'élastomère isoprénique sous la forme d'un masterbatch (voir par exemple demandes WO 97/36724 ou WO 99/16600).

Comme charge inorganique renforçante, doit être entendu dans la présente demande, par définition, toute charge inorganique ou minérale quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyle (-OH) à sa surface.

Comme charges inorganiques renforçantes conviennent notamment des charges minérales du type siliceux, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$, notamment entre 60 et 300 $m^2/g$. On citera également les charges minérales du type alumineux, en particulier de l'alumine ($Al_2O_3$) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à leur surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, de billes ou toute autre forme densifiée appropriée. Bien entendu, on entend également par charge inorganique renforçante des mélanges de différentes charges renforçantes, en particulier de charges siliceuses hautement dispersibles telles que décrites précédemment.

De manière préférentielle, le taux de charge renforçante totale (noir de carbone et/ou autre charge renforçante telle que silice) est compris entre 30 et 200 pce, plus préférentiellement entre 30 et 150 pce, et encore plus préférentiellement entre 70 et 130 pce, l'optimum étant de manière connue différent selon les applications particulières visées.

Selon une variante de l'invention, la charge renforçante est majoritairement autre que du noir de carbone, c'est-à-dire qu'elle comprend plus de 50% en poids du poids total de la charge renforçante, d'une ou de plusieurs charges autres que du noir de carbone, notamment une charge inorganique renforçante telle que la silice, voire elle est exclusivement constituée d'une telle charge.

Selon cette variante, lorsque du noir de carbone est également présent, il peut être utilisé à un taux inférieur à 20 pce, plus préférentiellement inférieur à 10 pce (par exemple entre 0,5 et 20 pce, notamment de 1 à 10 pce).

Selon une autre variante de l'invention, on utilise une charge renforçante comportant majoritairement du noir de carbone, et optionnellement de la silice ou une autre charge inorganique.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition

à titre de charge renforçante, on peut utiliser comme agents de couplage des organosilanes, notamment des alkoxysilanes polysulfurés ou des mercaptosilanes, ou encore des polyorganosiloxanes au moins bifonctionnels.

Dans la composition selon l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante. Son taux est aisément ajusté par l'homme du métier selon le taux de cette charge; il est typiquement de l'ordre de 0,5% à 15% en poids par rapport à la quantité de charge inorganique renforçante autre que du noir de carbone.

La composition de caoutchouc selon l'invention peut également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité de la composition, d'améliorer sa faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisé telles que décrites dans les demandes WO-A-2006/069792, WO-A-2006/069793, WO-A-2008/003434 et WO-A-2008/003435.

La composition de caoutchouc selon l'invention peut comporter également tout ou partie des additifs usuels habituellement utilisés dans les compositions d'élastomères destinées à la fabrication de pneumatiques, comme par exemple des pigments, des charges non renforçantes, des agents de protection tels que cires anti-ozone, anti-ozonants chimiques, anti-oxydants, des agents anti-fatigue, des agents plastifiants, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé de préparation d'une composition selon l'invention, comprend généralement :

(i) la réalisation, à une température maximale comprise entre 130 °C et 180 °C, d'un premier temps de travail thermomécanique des constituants de la composition comprenant l'élastomère diénique modifié selon l'invention et une charge renforçante, à l'exception d'un système de réticulation, puis

(ii) la réalisation, à une température inférieure à ladite température maximale dudit premier temps, d'un second temps de travail mécanique au cours duquel est incorporé ledit système de réticulation.

Ce procédé peut également comprendre, préalablement à la réalisation des étapes (i) et (ii) précitées, les étapes de la préparation de l'élastomère diénique modifié selon le procédé décrit plus haut.

L'invention a également pour objet un article semi-fini en caoutchouc pour pneumatique, comprenant une composition de caoutchouc selon l'invention, réticulable ou réticulée ou constitué d'une telle composition.

La composition finale ainsi obtenue peut ensuite être calandrée, par exemple sous la forme d'une feuille, d'une plaque ou encore extrudée, par exemple pour former un profilé de caoutchouc utilisable comme produit semi-fini en caoutchouc destiné au pneumatique.

En raison du compromis hystérèse / mise en oeuvre à cru amélioré tout en maintenant la résistance au fluage de l'élastomère qui caractérise une composition de caoutchouc renforcée selon l'invention, on notera qu'une telle composition peut constituer tout produit semi-fini du pneumatique et tout particulièrement la bande de roulement, diminuant notamment sa résistance au roulement.

L'invention a donc enfin pour objet un pneumatique comportant un article semi-fini selon l'invention, en particulier une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

Exemples

Mesures et tests utilisés

Chromatographie d'exclusion stérique

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45$\mu$m avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 $mL.min^{-1}$, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 $\mu$L. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique (par rapport à la masse du polymère) de motifs type styrène, 23% massique (par rapport à la partie butadiénique) de motifs type 1-2 et 50% massique (par rapport à la partie butadiénique) de motifs type 1-4 trans.

Chromatographie d'exclusion stérique haute résolution

La technique de SEC haute résolution est utilisée pour déterminer les pourcentages massiques des différentes populations de chaînes présentes dans un échantillon de polymère.

Il n'y a pas de traitement particulier de l'échantillon de polymère avant analyse. Celui-ci est simplement solubilisé dans le solvant d'élution à une concentration d'environ 1 $g.L^{-1}$. Puis la solution est filtrée sur filtre de porosité 0,45 $\mu$m avant injection.

L'appareillage utilisé est une chaîne chromatographique "WATERS alliance 2695". Le solvant d'élution est le tétrahydrofurane, le débit de 0,2 $ml.min^{-1}$, la température du système de 35 °C. Un jeu de trois colonnes identiques en série est utilisé (Shodex, longueur 300 mm, diamètre 8 mm). Le nombre de plateaux théoriques du jeu de colonnes est supérieur à 22 000. Le volume injecté de la solution de l'échantillon de polymère est 50 $\mu$L. Le détecteur est un réfractomètre différentiel "WATERS 2414" et le logiciel d'exploitation des données chromatographiques est le système "WATERS EMPOWER".

Les masses molaires calculées sont relatives à une courbe d'étalonnage réalisée pour des SBR de microstructure suivante : 25 % massique (par rapport à la masse du polymère) de motifs type styrène, 23 % massique (par rapport à la partie butadiénique) de motifs type 1,2 et 50 % massique (par rapport à la partie butadiénique) de motifs type 1,4-trans.

Viscosité Mooney

Pour les polymères et les compositions de caoutchouc, les viscosités Mooney $ML_{(1+4)}$100 °C sont mesurées selon la norme ASTM D-1646.

Un consistomètre oscillant est utilisé tel que décrit dans la norme ASTM D-1646. La mesure de plasticité Mooney se fait selon le principe suivant : l'élastomère ou la composition à l'état cru (i.e. avant cuisson) est moulé(e) dans une enceinte cylindrique chauffée à 100 °C. Après une minute de préchauffage, le rotor tourne au sein de l'éprouvette à 2 tours/minute et le couple utile pour entretenir ce mouvement après 4 minutes de rotation est mesuré. La plasticité Mooney $ML_{(1+4)}$ est exprimée en "unité Mooney" (UM, avec 1 UM = 0,83 N.m).

La différence entre la viscosité Mooney de la composition et la viscosité Mooney de l'élastomère permet de mesurer la processabilité ou mise en oeuvre à cru. Plus cette différence est faible, meilleure est la mise en oeuvre à cru.

Calorimétrie différentielle

Les températures de transition vitreuse (Tg) des élastomères sont déterminées à l'aide d'un calorimètre différentiel ("differential scanning calorimeter").

Spectroscopie proche infrarouge (NIR)

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN $^{13}C$. Le taux de styrène et la microstructure sont alors calculés à partir du spectre NIR d'un film d'élastomère d'environ 730 $\mu$m d'épaisseur. L'acquisition du spectre est réalisée en mode transmission entre 4000 et 6200 $cm^{-1}$ avec une résolution de 2 $cm^{-1}$, à l'aide d'un spectromètre proche infrarouge à transformée de Fourier Bruker Tensor 37 équipé d'un détecteur InGaAs refroidi par effet Peltier.

Viscosité inhérente

La viscosité inhérente des élastomères à 25 °C est déterminée à partir d'une solution d'élastomère à 0,1 $g.dL^{-1}$ dans le toluène, selon le principe suivant :
La viscosité inhérente est déterminée par la mesure du temps d'écoulement *t* de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 $\pm$ 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C} \ln\left[\frac{(t)}{(t_o)}\right]$$

avec :

- C : concentration de la solution de polymère dans le toluène en $g.dL^{-1}$,
- *t* : temps d'écoulement de la solution de polymère dans le toluène en seconde,
- $t_o$ : temps d'écoulement du toluène en seconde,
- $\eta_{inh}$ : viscosité inhérente exprimée en $dL.g^{-1}$.

Cold-Flow ($CF_{(1+6)}$100°C)

Il s'agit de mesurer la masse d'élastomère extrudée à travers une filière calibrée pendant un temps donné (6 heures) et dans des conditions fixées (T = 100 °C). La filière a un diamètre de 6,35 mm, une épaisseur de 0,5 mm et est située au fond et au centre d'une coupe cylindrique évidée de 52 mm de diamètre.

Dans ce dispositif sont placés 40 $\pm$ 4 g d'élastomère préalablement mis sous forme de pastille (2 cm d'épaisseur et 52 mm de diamètre). Sur la pastille d'élastomère est positionné un piston calibré de 1 kg ($\pm$ 5 g). L'ensemble est ensuite placé dans une étuve à 100 $\pm$ 0,5 °C.

Les conditions n'étant pas stabilisées lors de la première heure dans l'étuve, le produit extrudé à t = 1 heure est découpé puis jeté.

La mesure est ensuite poursuivie pendant 6 heures $\pm$ 5 mn, durant lesquelles le produit est laissé dans l'étuve. A l'issue des 6 heures, l'échantillon de produit extrudé est découpé puis pesé. Le résultat de la mesure est la masse d'élastomère pesée. Plus ce résultat est faible, plus l'élastomère résiste au fluage à froid.

Résonance Magnétique Nucléaire (RMN)

La RMN $^{1}H$ permet de quantifier les groupements méthyl portés par le silicium ($SiCH_3$) par intégration du signal correspondant, situé autour de $\delta$ = 0 ppm. Les échantillons sont solubilisés dans le sulfure de carbone ($CS_2$). 100 $\mu$L

de cyclohexane deutéré ($C_6D_{12}$) sont ajoutés pour le signal de lock. Les analyses RMN sont réalisées sur un spectromètre 500 MHz BRUKER équipé d'une sonde "large bande" BBIz 5 mm. Pour l'expérience RMN $^1H$ quantitative, la séquence utilise une impulsion 30° et un délai de répétition de 2 secondes.

Propriétés dynamiques

Les propriétés dynamiques, et en particulier tan $\delta$ max, sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (40°C) selon la norme ASTM D 1349-99. On effectue un balayage en amplitude de déformation de 0,1% à 50% crête-crête (cycle aller), puis de 50% à 0,1% crête-crête (cycle retour). Le résultat plus particulièrement exploité est le facteur de perte tan $\delta$. Pour le cycle retour, on indique la valeur maximale de tan $\delta$ observée, noté tan $\delta$ max. Cette valeur est représentative de l'hystérèse du matériau et dans le cas présent de la résistance au roulement : plus la valeur de tan $\delta$ max est faible, plus la résistance au roulement est basse. Dans les exemples, les résultats des propriétés dynamiques sont donnés en base 100. Plus ce nombre exprimé en base 100 est élevé, plus l'hystérèse est faible.

Préparation des polymères

**Préparation du polymère A** : SBR fonctionnel silanol en extrémité de chaîne selon l'invention

Dans un réacteur de 90 litres, maintenu sous une pression d'azote d'environ 2 bars, contenant 46 kg de méthylcyclohexane, sont injectés 2 kg de styrène et 4,7 kg de butadiène ainsi que 260 mL d'une solution de tétrahydrofurfuryl éthyle éther à 0,1 $mol.L^{-1}$ dans le méthylcyclohexane. Après neutralisation des impuretés protiques dans la solution à polymériser par addition de n-butyllithium, sont ajoutés 770 mL de n-butyllithium (n-BuLi) à 0,05 $mol.L^{-1}$ dans le méthylcyclohexane. La polymérisation est conduite à 40 °C.

Après 80 minutes, le taux de conversion des monomères atteint 88 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale") laquelle est mesurée à 25 °C à 0,1 $g.L^{-1}$ dans le toluène, est de 1,26 $dL.g^{-1}$. La masse molaire moyenne en nombre, $M_n$, déterminée par la technique de SEC, est de 139 000 $g.mol^{-1}$ et l'indice de polymolécularité, Ip, est de 1,04.

481 mL d'une solution de tétrachlorure d'étain à 0,004 $mol.L^{-1}$ dans le méthylcyclohexane sont alors ajoutés ($SnCl_4$/Li = 0,050). Après 1 minute à 40 °C, 825 mL d'une solution d'hexaméthylcyclotrisiloxane à 0,021 $mol.L^{-1}$ sont ajoutés (0,45 éq. / Li). La solution est ensuite antioxydée par addition de 0,4 parties pour cent parties d'élastomère (pce) de 2,2'-méthylène-bis-(4-méthyl-6-tertiobutylphénol) et de 0,2 pce de N-(1,3-diméthylbutyl)-N'-phényl-p-phénylènediamine.

Le polymère ainsi traité est séparé de sa solution par une opération de stripping à la vapeur d'eau, puis séché sur outil à cylindre à 100 °C.

La viscosité inhérente "finale" mesurée est de 1,45 $dL.g^{-1}$. Le saut de viscosité, défini comme le rapport de ladite viscosité "finale" sur ladite viscosité "initiale", est ici de 1,15.

La viscosité Mooney de ce polymère A est 57.

La masse molaire moyenne en nombre, $M_n$, déterminée par la technique de SEC, est de 150 500 $g.mol^{-1}$ et l'indice de polymolécularité, Ip, est de 1,20.

Les pourcentages massiques d'espèces fonctionnalisées par un groupement silanol en extrémité de chaîne et étoilées, déterminés par la technique de SEC HR, sont respectivement de 80 % et 20 %.

La microstructure de ce polymère est déterminée par la méthode NIR. Le taux de motifs 1,2 est de 58,5 % par rapport aux unités butadiène. Le taux massique de styrène est de 25,8 %.

La température de transition vitreuse de ce polymère est de - 25 °C.

Le taux de fonction $(CH_3)_2Si$ déterminé par RMN $^1H$ pour le polymère A est de 3,3 $mmol.kg^{-1}$.

Le cold-flow $CF_{(1+6)}$100°C du polymère est de 2,1.

**Préparation du polymère B** : SBR fonctionnel silanol en extrémité de chaîne - exemple 2 selon l'invention

Dans 3 réacteurs alimentés continu de 14 L agités disposés en série, supposés parfaitement agités selon l'homme de l'art, sont introduits en continu du méthylcyclohexane, du butadiène, du styrène et du tétrahydrofurfuryl éthyle éther, selon les proportions suivantes : débit massique butadiène = 3,049 kg.h-1, débit massique styrène = 1,219 kg.h-1, concentration massique totale en monomère = 10 wt.%, débit massique de tétrahydrofurfuryl éthyle éther = 162 g/h.

Du n-butyllithium (n-BuLi) est introduit en quantité suffisante afin de neutraliser les impuretés protiques apportées par les différents constituants présents dans l'entrée de ligne. A l'entrée du premier réacteur, 546 μmol de n-BuLi pour 100 g de monomère sont introduits.

Les différents débits sont calculés afin que le temps de séjour moyen dans le dernier réacteur soit de 45 min. Les 3 réacteurs en série sont respectivement maintenus aux températures suivantes : 35°C, 44°C et 70°C.

A la sortie du réacteur de polymérisation, un prélèvement de solution de polymère est effectué. Le polymère est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est séparé de sa solution par une opération de stripping à la vapeur d'eau, puis séché sur un outil à cylindres à 100 °C. La viscosité inhérente "initiale" mesurée est de 1,65 dL.g-1. La masse molaire moyenne en nombre, Mn, déterminée par la technique de SEC, est de 135000 g.mol-1 et l'indice de polymolécularité, Ip, est de 1,38.

En sortie du troisième réacteur de polymérisation, 29 μmol pour 100 g de monomère de tétrachlorure d'étain en solution dans le méthylcyclohexane sont ajoutés à la solution de polymère vivant (SnCl4/Li = 0,07) puis 202 μmol pour 100 g de monomère d'hexaméthylcyclotrisiloxane (1,7 éq. / Li) en solution dans le méthylcyclohexane sont ajoutés.

Le polymère est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est séparé de sa solution par une opération de stripping à la vapeur d'eau, puis séché sur un outil à cylindres à 100 °C.

La viscosité inhérente "finale" mesurée est de 2,02 dL.g-1. Le saut de viscosité, défini comme le rapport de ladite viscosité "finale" sur ladite viscosité "initiale", est ici de 1,22.

La viscosité Mooney de ce polymère B est de 59.

La masse molaire moyenne en nombre, $M_n$, déterminée par la technique de SEC, est de 157000 $g.mol^{-1}$ et l'indice de polymolécularité, Ip, est de 1,53.

La microstructure de ce polymère est déterminée par la méthode NIR. Le taux de motifs 1,2 est de 57,9 % par rapport aux unités butadiène. Le taux massique de styrène est de 25,5 %.

La température de transition vitreuse de ce polymère est de - 25 °C.

Le taux de fonction $(CH_3)_2Si$ déterminé par RMN $^1H$ pour le polymère B est de 4,1 $mmol.kg^{-1}$.

Le cold-flow $CF_{(1+6)}$100°C du polymère est de 2,4.

**Préparation du polymère C** : SBR fonctionnel silanol en extrémité de chaîne - témoin

Dans un réacteur continu agité de 32,5 L, supposé parfaitement agité selon l'homme de l'art, sont introduits en continu du méthylcyclohexane, du butadiène, du styrène et du tétrahydrofurfuryl éthyle éther, selon les proportions suivantes : débit massique butadiène = 1,49 $kg.h^{-1}$, débit massique styrène = 0,511 $kg.h^{-1}$, concentration massique en monomère = 12,5 wt.%, 350 ppm tétrahydrofurfuryl éthyle éther. Du n-butyllithium (n-BuLi) est introduit en quantité suffisante afin de neutraliser les impuretés protiques apportées par les différents constituants présents dans l'entrée de ligne. A l'entrée du réacteur, 645 μmol de n-BuLi pour 100 g de monomère sont introduits.

Les différents débits sont calculés afin que le temps de séjour moyen dans le réacteur soit de 40 min. La température est maintenue à 80 °C.

A la sortie du troisième réacteur de polymérisation, un prélèvement de solution de polymère est effectué. Le polymère est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine. Le polymère ainsi traité est séparé de sa solution par une opération de stripping à la vapeur d'eau, puis séché sur un outil à cylindres à 100 °C. La viscosité inhérente "initiale" mesurée est de 1,86 $dL.g^{-1}$. La masse molaire moyenne en nombre, $M_n$, déterminée par la technique de SEC, est de 121 000 $g.mol^{-1}$ et l'indice de polymolécularité, Ip, est de 1,90 (ce qui ne satisfait pas à la définition du élastomère diénique fonctionnalisé a) selon l'invention).

En sortie de réacteur de polymérisation, 19 μmol pour 100 g de monomère de tétrachlorure d'étain en solution dans le méthylcyclohexane sont ajoutés à la solution de polymère vivant ($SnCl_4$/Li = 0,029) puis 245 μmol pour 100 g de monomère d'hexaméthylcyclotrisiloxane (0,38 éq. / Li) en solution dans le méthylcyclohexane sont ajoutés.

Le polymère est ensuite soumis à un traitement anti-oxydant avec ajout de 0,4 pce de 2,2'-méthylène-bis-(4-méthyl-6-tertiobutylphénol) et 0,2 pce de N-(1,3-diméthylbutyl)-N'-phényl-p-phénylènediamine.

Le polymère ainsi traité est séparé de sa solution par une opération de stripping à la vapeur d'eau, puis séché sur un outil à cylindres à 100 °C.

La viscosité inhérente "finale" mesurée est de 1,98 $dL.g^{-1}$. Le saut de viscosité, défini comme le rapport de ladite viscosité "finale" sur ladite viscosité "initiale", est ici de 1,06.

La viscosité Mooney de ce polymère C est de 57.

La masse molaire moyenne en nombre, $M_n$, déterminée par la technique de SEC, est de 130 000 $g.mol^{-1}$ et l'indice de polymolécularité, Ip, est de 1,9.

La microstructure de ce polymère est déterminée par la méthode NIR. Le taux de motifs 1,2 est de 58,3 % par rapport aux unités butadiène. Le taux massique de styrène est de 25,1 %.
La température de transition vitreuse de ce polymère est de - 24 °C.
Le taux de fonction $(CH_3)_2Si$ déterminé par RMN $^1H$ pour le polymère C est de 5,3 $mmol.kg^{-1}$.
Le cold-flow $CF_{(1+6)}$100°C du polymère est de 1,9.

**Préparation du polymère D** : SBR fonctionnel silanol en extrémité de chaîne- témoin

Dans un réacteur de 90 litres, maintenu sous une pression d'azote d'environ 2 bars, contenant 46 kg de méthylcyclohexane, sont injectés 2 kg de styrène et 4,7 kg de butadiène ainsi que 260 mL d'une solution de tétrahydrofurfuryl éthyle éther à 0,1 $mol.L^{-1}$ dans le méthylcyclohexane. Après neutralisation des impuretés protiques dans la solution à polymériser par addition de n-butyllithium, sont ajoutés 500 mL de n-butyllithium (n-BuLi) à 0,05 $mol.L^{-1}$ dans le méthylcyclohexane. La polymérisation est conduite à 40 °C.
Après 80 minutes, le taux de conversion des monomères atteint 88 %. Ce taux est déterminé par pesée d'un extrait séché à 140 °C, sous la pression réduite de 200 mmHg. Un échantillon témoin est alors prélevé depuis le réacteur puis stoppé avec un excès de méthanol par rapport au lithium. La viscosité inhérente (viscosité "initiale") laquelle est mesurée à 25 °C à 0,1 $g.L^{-1}$ dans le toluène, est de 1,86 $dL.g^{-1}$. La masse molaire moyenne en nombre, $M_n$, déterminée par la technique de SEC, est de 205 000 $g.mol^{-1}$ et l'indice de polymolécularité, Ip, est de 1,05.
311 mL d'une solution de tétrachlorure d'étain à 0,004 $mol.L^{-1}$ dans le méthylcyclohexane sont alors ajoutés ($SnCl_4$/Li = 0,050). Après 1 minute à 40 °C, 474 mL d'une solution d'hexaméthylcyclotrisiloxane à 0,021 $mol.L^{-1}$ sont ajoutés (0,4 éq. / Li). La solution est ensuite antioxydée par addition de 0,4 parties pour cent parties d'élastomère (pce) de 2,2'-méthylène-bis-(4-méthyl-6-tertiobutylphénol) et de 0,2 pce de N-(1,3-diméthylbutyl)-N'-phényl-p-phénylènediamine.
Le polymère ainsi traité est séparé de sa solution par une opération de stripping à la vapeur d'eau, puis séché sur outil à cylindre à 100 °C.
La viscosité inhérente "finale" mesurée est de 2,15 $dL.g^{-1}$. Le saut de viscosité, défini comme le rapport de ladite viscosité "finale" sur ladite viscosité "initiale", est ici de 1,16.
La viscosité Mooney de ce polymère D est 100 (ce qui ne répond pas à la définition de l'invention).
La masse molaire moyenne en nombre, $M_n$, déterminée par la technique de SEC, est de 222 200 $g.mol^{-1}$ et l'indice de polymolécularité, Ip, est de 1,20.
Les pourcentages massiques d'espèces fonctionnalisées par un groupement silanol en extrémité de chaîne et étoilées, déterminés par la technique de SEC HR, sont respectivement de 80 % et 20 %.
La microstructure de ce polymère est déterminée par la méthode NIR. Le taux de motifs 1,2 est de 58,5 % par rapport aux unités butadiène. Le taux massique de styrène est de 25,8 %.
La température de transition vitreuse de ce polymère est de - 25 °C.
Le taux de fonction $(CH_3)_2Si$ déterminé par RMN $^1H$ pour le polymère D est de 3,1 $mmol.kg^{-1}$.
Le cold-flow $CF_{(1+6)}$100°C du polymère est de 2,1.

Exemples comparatifs de compositions de caoutchouc

On compare trois compositions reportées dans le tableau 1 ci-après. La composition 1 est conforme à l'invention. Les compositions 2 et 3 sont des compositions comparatives non-conformes à l'invention.
Les formulations sont exprimées en pourcentage en poids pour 100 parties en poids d'élastomère (pce).

Tableau 1

| | Exemples | | Exemples comparatifs | |
|---|---|---|---|---|
| | 1 | 2 | 3 | 4 |
| Polymère A | 80 | 0 | 0 | 0 |
| Polymère B | 0 | 80 | 0 | 0 |
| Polymère C | 0 | 0 | 80 | 0 |
| Polymère D | 0 | 0 | 0 | 80 |
| BR-Nd ML44 (1) | 20 | 20 | 20 | 20 |
| Silice (2) | 73 | 73 | 73 | 73 |

(suite)

| | Exemples | | Exemples comparatifs | |
|---|---|---|---|---|
| | 1 | 2 | 3 | 4 |
| N234 | 3 | 3 | 3 | 3 |
| Huile MES (3) | 6 | 6 | 6 | 6 |
| Résine (4) | 20 | 20 | 20 | 20 |
| Agent de couplage (5) | 6 | 6 | 6 | 6 |
| ZnO | 1 | 1 | 1 | 1 |
| Acide stéarique | 2 | 2 | 2 | 2 |
| Anti-oxydant (6) | 2 | 2 | 2 | 2 |
| Cire anti-ozone "C32ST" (7) | 1,6 | 1,6 | 1,6 | 1,6 |
| Diphénylgua -nidine | 1,3 | 1,3 | 1,3 | 1,3 |
| Soufre | 1 | 1 | 1 | 1 |
| Sulfénamide (8) | 1,6 | 1,6 | 1,6 | 1,6 |
| (1) polybutadiène 1,4-cis obtenu par polymérisation catalysée par le Néodyme ; Mooney élastomère = 44<br>(2) Silice "Zeosil 1165MP" de Rhodia.<br>(3) Catenex® SBR de Shell.<br>(4) Polylimonène.<br>(5) "Si69" de Degussa.<br>(6) N-(1,3-dimethylbutyl)-N'-phenyl-p-phénylenediamine.<br>(7) Anti-ozone de Repsol.<br>(8) N-cyclohexyl-2-benzothiazylsulphenamide. | | | | |

Pour les essais qui suivent, on procède de la manière suivante :

Chacune des compositions est réalisée, dans un premier temps, par un travail thermo-mécanique, puis, dans un second temps de finition, par un travail mécanique.

On introduit dans un mélangeur interne de laboratoire de type « Banbury », dont la capacité est de 400 $cm^3$, qui est rempli à 72% et dont la température initiale est de 90°C, l'élastomère, deux tiers de la silice, l'agent de couplage, la diphénylguanidine et le noir de carbone.

Le travail thermo-mécanique est réalisé au moyen de palettes dont la vitesse moyenne est de 50 tr/min et dont la température est de 90°C.

Après une minute, on introduit le dernier tiers de silice, l'antioxydant, l'acide stéarique et la cire anti-ozone, l'huile MES et la résine, toujours sous travail thermo-mécanique.

Après deux minutes, on introduit l'oxyde de zinc, la vitesse des palettes étant de 50 tr/min.

Le travail thermo-mécanique est encore conduit pendant deux minutes, jusqu'à une température maximale de tombée de 160°C environ.

On récupère le mélange ainsi obtenu, on le refroidit puis, dans un mélangeur externe (homo-finisseur), on ajoute le soufre et la sulfénamide à 30°C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, par exemple comme produits semi-finis pour pneumatiques, en particulier pour des bandes de roulement.

La réticulation est effectuée à 150°C pendant 40 min.

Les résultats sont présentés dans le tableau 2.

Tableau 2

| Résultats caoutchouterie (Tan δ max 40°C, $ML_{(1+4)}$100°C composition, Cold-Flow) : | | | | |
|---|---|---|---|---|
| | Exemples | | Exemples comparatifs | |
| | 1 | 2 | 3 | 4 |
| | A | B | c | D |
| $ML_{(1+4)}$ 100°C élastomère | 57 | 59 | 57 | 100 |
| Tan δ max 40°C | 110 | 100 | 100 | 105 |
| $ML_{(1+4)}$ 100°C composition | 92,4 | 92 | 97,3 | N.M.* |
| $ML_{(1+4)}$100°C composition - $ML_{(1+4)}$100°C élastomère | 35,4 | 33 | 40,3 | - |
| Cold-Flow (g/6h) | 2,1 | 2,4 | 1,9 | 2,1 |
| * Valeur non mesurable car trop élevée. | | | | |

Les résultats présentés dans le tableau 2 montrent une hystérèse améliorée des compositions 1 et 2 selon l'invention par rapport à celle de la composition témoin 3 (polymère C à indice de polymolécularité avant fonctionnalisation et étoilage élevé) et à celle de la composition témoin 4 (polymère D à forte viscosité Mooney).

La processabilité des compositions 1 et 2 selon l'invention est meilleure que celle des compositions témoin 3 et 4.

Enfin, la résistance au fluage des compositions 1 et 2 est comparable à celle des compositions témoin 3 et 4.

Ainsi, les résultats présentés dans le Tableau 2 mettent en évidence une amélioration du compromis hystérèse / mise en oeuvre à cru de la composition contenant le polymère selon l'invention tout en maintenant la résistance au fluage de l'élastomère.

## Revendications

**1.** Elastomère diénique modifié comprenant :

a) au moins 70% en poids, par rapport au poids total de l'élastomère diénique modifié, d'un élastomère diénique fonctionnalisé en une seule extrémité de chaîne par une fonction silanol ou un bloc polysiloxane ayant une extrémité silanol et présentant un indice de polymolécularité avant fonctionnalisation inférieur ou égal à 1,6,
b) plus de 0 et jusqu'à 30% en poids, par rapport au poids total de l'élastomère diénique modifié, d'un élastomère diénique étoilé et présentant un indice de polymolécularité avant étoilage inférieur ou égal à 1,6,

la viscosité Mooney dudit élastomère diénique modifié variant de 30 à 80.

**2.** Elastomère selon la revendication 1, **caractérisé en ce que** le bloc polysiloxane ayant une extrémité silanol répond à la formule :

$$[-(SiR_1R_2O)_x-H]$$

dans laquelle :

- $R_1$ et $R_2$, identiques ou différents, représentent un groupe alkyle, cycloalkyle, aryle, alkaryle, aralkyle, vinyle ayant de 1 à 10 atomes de carbone,
- x est un nombre entier allant de 1 à 1500.

**3.** Elastomère selon la revendication 2, **caractérisé en ce que** $R_1$ et $R_2$, identiques ou différents, représentent un groupe alkyle ayant de 1 à 6 atomes de carbone, de préférence le radical méthyle.

**4.** Elastomère diénique modifié selon la revendication 1, **caractérisé en ce qu'**il comprend au moins 80% en poids, par rapport au poids total de l'élastomère diénique modifié, de l'élastomère diénique fonctionnalisé a).

**5.** Elastomère diénique modifié selon l'une quelconque des revendications 1 à 4, **caractérisé en ce qu'**il comprend

au plus 20% en poids, par rapport au poids total de l'élastomère diénique modifié, de l'élastomère diénique étoilé b).

6. Elastomère selon la revendication 1, **caractérisé en ce que** l'élastomère diénique étoilé est un élastomère étoilé à base d'étain ou de silicium.

7. Elastomère diénique modifié selon l'une quelconque des revendications précédentes, **caractérisé en ce que** l'élastomère diénique étoilé b) est un élastomère diénique étoilé à quatre branches.

8. Elastomère diénique modifié selon l'une quelconque des revendications précédentes, **caractérisé en ce que** l'élastomère diénique est un copolymère de butadiène et d'un monomère vinylaromatique, de préférence un copolymère butadiène-styrène.

9. Elastomère diénique modifié selon l'une quelconque des revendications précédentes **caractérisé en ce que** les élastomères diéniques a) et b) ont avant fonctionnalisation et étoilage la même microstructure et la même macrostructure.

10. Composition de caoutchouc renforcée à base d'au moins une charge renforçante et d'une matrice élastomère comprenant au moins un élastomère diénique modifié tel que défini à l'une quelconque des revendications 1 à 9.

11. Composition selon la revendication 10, **caractérisée en ce que** la ou les charges renforçantes comprennent plus de 50% en poids, par rapport au poids total de la ou des charges renforçantes, de charge inorganique renforçante.

12. Composition selon la revendication 10 ou 11, **caractérisée en ce que** la charge inorganique renforçante est constituée de silice.

13. Article semi-fini en caoutchouc pour pneumatique, **caractérisé en ce qu'**il comprend une composition de caoutchouc réticulable ou réticulée selon l'une quelconque des revendications 10 à 12.

14. Article semi-fini selon la revendication 13, **caractérisé en ce que** ledit article est une bande de roulement.

15. Pneumatique, **caractérisé en ce qu'**il comporte un article semi-fini tel que défini dans la revendication 14.

**Patentansprüche**

1. Modifiziertes Dienelastomer, umfassend:

a) mindestens 70 Gew.-%, bezogen auf das Gesamtgewicht des modifizierten Dienelastomers, eines Dienelastomers, das an einem einzigen Kettenende durch eine Silanolfunktion oder einen Polysiloxanblock mit einem Silanolende funktionalisiert ist und einen Polymolekularitätsindex vor der Funktionalisierung kleiner oder gleich 1,6 aufweist,
b) mehr als 0 und bis zu 30 Gew.-%, bezogen auf das Gesamtgewicht des modifizierten Dienelastomers, eines sternverzweigten Dienelastomers mit einem Polymolekularitätsindex vor der sternverzweigung kleiner oder gleich 1,6,

wobei die Mooney-Viskosität des modifizierten Dienelastomers im Bereich von 30 bis 80 liegt.

2. Elastomer nach Anspruch 1, **dadurch gekennzeichnet, dass** der Polysiloxanblock mit einem Silanolende der folgenden Formel entspricht:

$$[-(SiR_1R_2O)_x-H]$$

in der:

- $R_1$ und $R_2$ gleich oder verschieden sind und für eine Alkyl-, Cycloalkyl-, Aryl-, Alkaryl-, Aralkyl- oder Vinylgruppe mit 1 bis 10 Kohlenstoffatomen stehen,
- x für eine ganze Zahl im Bereich von 1 bis 1500 steht.

3. Elastomer nach Anspruch 2, **dadurch gekennzeichnet, dass** $R_1$ und $R_2$ gleich oder verschieden sind und für eine Alkylgruppe mit 1 bis 6 Kohlenstoffatomen, vorzugsweise den Methylrest, stehen.

4. Modifiziertes Dienelastomer nach Anspruch 1, **dadurch gekennzeichnet, dass** es mindestens 80 Gew.-%, bezogen auf das Gesamtgewicht des modifizierten Dienelastomers, des funktionalisierten Dienelastomers a) umfasst.

5. Modifiziertes Dienelastomer nach einem der Ansprüche 1 bis 4, **dadurch gekennzeichnet, dass** es höchstens 20 Gew.-%, bezogen auf das Gesamtgewicht des modifizierten Dienelastomers, des sternverzweigten Dienelastomers b) umfasst.

6. Elastomer nach Anspruch 1, **dadurch gekennzeichnet, dass** es sich bei dem sternverzweigten Dienelastomer um ein sternverzweigtes Elastomer auf Basis von Zinn oder Silicium handelt.

7. Modifiziertes Dienelastomer nach einem der vorhergehenden Ansprüche, **dadurch gekennzeichnet, dass** es sich bei dem sternverzweigten Dienelastomer b) um ein sternverzweigtes Dienelastomer mit vier Verzweigungen handelt.

8. Modifiziertes Dienelastomer nach einem der vorhergehenden Ansprüche, **dadurch gekennzeichnet, dass** es sich bei dem Dienelastomer um ein Copolymer von Butadien und einem vinylaromatischen Monomer, vorzugsweise ein Butadien-Styrol-Copolymer, handelt.

9. Modifiziertes Dienelastomer nach einem der vorhergehenden Ansprüche, **dadurch gekennzeichnet, dass** die Dienelastomere a) und b) vor der Funktionalisierung und Sternverzweigung die gleiche Mikrostruktur und die gleiche Makrostruktur aufweisen.

10. Verstärkte Kautschukzusammensetzung auf Basis von mindestens einem verstärkenden Füllstoff und einer Elastomermatrix, die mindestens ein modifiziertes Dienelastomer gemäß einem der Ansprüche 1 bis 9 umfasst.

11. Zusammensetzung nach Anspruch 10, **dadurch gekennzeichnet, dass** der verstärkende Füllstoff bzw. die verstärkenden Füllstoffe mehr als 50 Gew.-%, bezogen auf das Gesamtgewicht des verstärkenden Füllstoffs bzw. der verstärkenden Füllstoffe, verstärkenden anorganischen Füllstoff umfassen.

12. Zusammensetzung nach Anspruch 10 oder 11, **dadurch gekennzeichnet, dass** der verstärkende anorganische Füllstoff aus Kieselsäure besteht.

13. Kautschukhalbzeug für einen Reifen, **dadurch gekennzeichnet, dass** es eine vernetzbare oder vernetzte Kautschukzusammensetzung nach einem der Ansprüche 10 bis 12 umfasst.

14. Halbzeug nach Anspruch 13, **dadurch gekennzeichnet, dass** es sich dabei um eine Lauffläche handelt.

15. Reifen, **dadurch gekennzeichnet, dass** er ein Halbzeug gemäß Anspruch 14 umfasst.

## Claims

1. Modified diene elastomer comprising:

   a) at least 70% by weight, relative to the total weight of the modified diene elastomer, of a diene elastomer functionalized at just one chain end with a silanol function or a polysiloxane block having a silanol end, and having a polydispersity index before functionalization less than or equal to 1.6,
   b) more than 0 and up to 30% by weight, relative to the total weight of the modified diene elastomer, of a star-branched diene elastomer having a polydispersity index before star-branching less than or equal to 1.6,

   the Mooney viscosity of said modified diene elastomer varying from 30 to 80.

2. Elastomer according to Claim 1, **characterized in that** the polysiloxane block having a silanol end corresponds to formula:

   [-(SiR1R20)x-H]

in which:

- R1 and R2, which may be identical or different, represent an alkyl, cycloalkyl, aryl, alkaryl, aralkyl or vinyl group having from 1 to 10 carbon atoms,
- x is an integer ranging from 1 to 1500.

3. Elastomer according to Claim 2, **characterized in that** R1 and R2, which may be identical or different, represent an alkyl group having from 1 to 6 carbon atoms, preferably the methyl radical.

4. Modified diene elastomer according to Claim 1, **characterized in that** it comprises at least 80% by weight, relative to the total weight of the modified diene elastomer, of the functionalized diene elastomer a).

5. Modified diene elastomer according to any one of Claims 1 to 4, **characterized in that** it comprises at most 20% by weight, relative to the total weight of the modified diene elastomer, of the star-branched diene elastomer b).

6. Elastomer according to Claim 1, **characterized in that** the star-branched diene elastomer is a tin-based or silicon-based star-branched elastomer.

7. Modified diene elastomer according to any one of the preceding claims, **characterized in that** the star-branched diene elastomer b) is a star-branched diene elastomer comprising 4 branches.

8. Modified diene elastomer according to any one of the preceding claims, **characterized in that** the diene elastomer is a copolymer of butadiene and of a vinylaromatic monomer, preferably a butadiene/styrene copolymer.

9. Modified diene elastomer according to any one of the preceding claims, **characterized in that** the diene elastomers a) and b) have, before functionalization and star-branching, the same microstructure and the same macrostructure.

10. Reinforced rubber composition based on at least one reinforcing filler and an elastomer matrix comprising at least one modified diene elastomer as defined in any one of Claims 1 to 9.

11. Composition according to Claim 10, **characterized in that** the reinforcing filler(s) comprise(s) more than 50% by weight, relative to the total weight of the reinforcing filler(s), of reinforcing inorganic filler.

12. Composition according to Claim 10 or 11, **characterized in that** the reinforcing inorganic filler consists of silica.

13. Semi-finished article made of rubber for a tyre, **characterized in that** it comprises a crosslinkable or crosslinked rubber composition according to any one of Claims 10 to 12.

14. Semi-finished article according to Claim 13, **characterized in that** said article is a tread.

15. Tire, **characterized in that** it comprises a semi-finished article as defined in Claim 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2951178 B1
- EP 778311 B1
- WO 2009077837 A1
- EP 0778311 A
- WO 9736724 A
- WO 9916600 A
- US 6610261 B
- US 6747087 B
- WO 9637547 A
- WO 9928380 A
- WO 2006069792 A
- WO 2006069793 A
- WO 2008003434 A
- WO 2008003435 A
- WO 0210269 A


### Littérature non-brevet citée dans la description


- **VILMIN, F. ; DUSSAP, C. ; COSTE, N.** *Applied Spectroscopy,* 2006, vol. 60, 619-29